# EUROPÄISCHE PATENTSCHRIFT

(11) **EP 2 004 432 B1**
(45) Veröffentlichungstag und Bekanntmachung des Hinweises auf die Patenterteilung: **18.08.2010**
(21) Anmeldenummer: 07723871.5
(22) Anmeldetag: 02.04.2007
(51) Int. Cl.: B60J 7/12

(54) **HARDTOP-KLAPPVERDECK FÜR EINEN OFFENEN KRAFTWAGEN**
HARDTOP FOLDING ROOF FOR AN OPEN MOTOR VEHICLE
CAPOTE DE TOIT OUVRANT POUR UN VEHICULE AUTOMOBILE OUVERT

(30) Priorität: 07.04.2006 DE 102006016486
(43) Veröffentlichungstag der Anmeldung: 24.12.2008
(73) Patentinhaber: Daimler AG, 70327 Stuttgart (DE)
(72) Erfinder: KOCH, Michael, 71032 Böblingen (DE)
(74) Vertreter: JENSEN & SON
(86) Internationale Anmeldenummer: PCT/EP2007/002930
(87) Internationale Veröffentlichungsnummer: WO 2007/115714

(56) Entgegenhaltungen:
- DE-C1- 4 445 580
- DE-C1- 19 751 660

## Beschreibung

Die Erfindung betrifft ein Hardtop-Klappverdeck für einen offenen Kraftwagen der im Oberbegriff des Patentanspruchs 1 angegebenen Art.

Ein derartiges Hardtop-Klappverdeck ist aus der DE 197 51 660 C1 als bekannt zu entnehmen, bei dem ein oberes, eigensteifes Dachteil und ein eine Heckscheibe umfassendes hinteres Dachteil über jeweils einen seitlich des Kraftwagens angeordneten Lenkermechanismus aus einer Schließstellung in eine Verstaustellung innerhalb eines Verdeckstauraums des Kraftwagens zu überführen sind. Jeder der beiden seitlichen Lenkermechanismen umfasst dabei zwei Hauptlenker, von denen jeweils ein erster, hinterer Hauptlenker der zugehörigen Dachsäule des hinteren Dachteils zugeordnet bzw. mit dieser fest verbunden ist, und ein jeweils zweiter Hauptlenker in einem Abstand von dem zugehörigen ersten Hauptlenker mittelbar am oberen Dachteil angelenkt ist. Die mittelbare Anlenkung der beiden jeweiligen Hauptlenker am oberen Dachteil erfolgt über einen als Zwischenlenker ausgebildeten Scharnierarm, der seinerseits fest mit dem oberen Dachteil verbunden ist. An ihren dem Zwischenlenker abgewandten Enden sind die beiden Hauptlenker jedes Lenkermechanismus in einem Abstand hintereinander karosseriefest angelenkt. Demgemäß bilden die beiden Hauptlenker sowie der Zwischenlenker jedes Lenkermechanismus ein Parallelogrammsgestänge, über welche das obere und das hintere Dachteil aus der Schließstellung in die Verstaustellung zu überführen sind. Während des Überführens des Klappverdecks wird eine Heckscheibenhalterung der Heckscheibe um eine in Fahrzeugquerrichtung verlaufende Mittelachse relativ zu den Dachsäulen bewegt, so dass diese in der Verstaustellung gleichsinnig zu dem oberen Dachteil gewölbt zu liegen kommt.

Durch die sich bei der Überführung des Klappverdecks drehende Heckscheibe kann somit bei abgeklappten Klappverdeck - beispielsweise im Unterschied zum Stand der Technik gemäß DE 44 45 580 C1 - der nutzbare Stauraum des als Kofferraum ausgebildeten Verdeckstauraums erheblich vergrößert werden. Allerdings erfordert die Drehung der Heckscheibe während der Überführung des Klappverdecks zwischen der Schließstellung und der Verstaustellung einen erheblichen mechanischen Aufwand. Darüber hinaus müssen relativ umfangreiche Maßnahmen getroffen werden, um die Drehscheibe in der Schließstellung gegenüber dem hinteren bzw. oberen Dachteil abzudichten.

Aufgabe der vorliegenden Erfindung ist es daher, ein Hardtop-Klappverdeck der eingangs genannten Art zu schaffen, welches unter Beibehaltung einer platzsparenden Anordnung in seiner Verstaustellung einfacher aufgebaut ist.

Diese Aufgabe wird erfindungsgemäß durch ein Hardtop-Klappverdeck mit den Merkmalen des Patenanspruchs 1 gelöst. Vorteilhafte Ausgestaltungen mit zweckmäßigen und nichttrivialen Weiterbildungen der Erfindung sind in den übrigen Patentansprüchen angegeben.

Bei dem Hardtop-Klappverdeck nach der Erfindung ist es vorgesehen, dass die zweiten Hauptlenker jedes Lenkermechanismus der Heckscheibenhalterung der Heckscheibe zugeordnet sind. Mit anderen Worten ist es erfindungsgemäß vorgesehen, dass die Funktion der zweiten Hauptlenker, welche in einem Abstand vor dem zugehörigen ersten Hauptlenker zumindest mittelbar an dem oberen Dachteil angelenkt sind, durch die Heckscheibenhalterung der beim Überführen des Klappverdecks separat von den Dachsäulen des hinteren Dachteils zu bewegenden Heckscheibe übernommen wird. Somit umfasst das vorliegende Hardtop-Klappverdeck keine separaten zweiten Hauptlenker mehr, sondern vielmehr sind diese Bestandteil der Heckscheibenhalterung, mit welcher die Heckscheibe beim Verfahren des Klappverdecks zwischen der Schließstellung und der Verstaustellung gegenüber den Dachsäulen des hinteren Dachteils zu bewegen bzw. zu verlagern ist. Die zweiten Hauptlenker der Heckscheibenhalterung bilden dabei mit den zugehörigen ersten Hauptlenker jedes Lenkermechanismus eine Parallelogrammanordnung, wobei die jeweiligen ersten und zweiten Hauptlenker sowohl an ihren oberen Anlenkungspunkten im Bereich des oberen Dachteils wie auch an ihren unteren Anlenkungspunkten im Bereich der Karosserie des Kraftwagens einen entsprechenden Abstand zueinander aufweisen.

Da die Heckscheibenhalterung über die beiden zweiten Hauptlenker in einem Abstand vor den jeweiligen Anlenkungspunkten der ersten Hauptlenker, welche die eigentliche Scharnierachse zwischen dem oberen Dachteil und den Dachsäulen des hinteren Dachteils bilden, angeordnet ist, kommt die Heckscheibe in der Verstaustellung des Klappverdecks um einen entsprechenden Längenversatz gegenüber dem oberen Dachteil bzw. den Dachsäulen des hinteren Dachteils in Fahrzeuglängsrichtung nach vorne versetzt zu liegen. Im Unterschied beispielsweise zum Stand der Technik gemäß der DE 44 45 580 C1 liegen somit das obere Dachteil und die Heckscheibe nicht mit entgegengesetzten Krümmungen direkt übereinander, sondern in Fahrzeuglängsrichtung um einen bestimmten Längenversatz versetzt zueinander. Durch diesen Längenversatz ist es möglich, das obere Dachteil und die entgegengesetzt gewölbte Heckscheibe in der Verstaustellung des Klappverdecks weitaus näher bzw. enger aneinander anzuordnen, so dass das obere Dachteil und die Heckscheibe ähnlich kompakt gegeneinander geklappt werden können, wie dies beispielsweise beim Gegenstand gemäß DE 197 51 660 C1 der Fall ist.

Dabei wird die äußerst kompakte Anordnung des oberen Dachteils gegenüber der Heckscheibe in der Verstaustellung des Klappverdecks auf einfache Weise dadurch erreicht, dass die zweiten Hauptlenker der Heckscheibenhalterung in einem Abstand vor dem jeweils zugehörigen ersten Hauptlenker zumindest mittelbar am oberen Dachteil angelenkt sind. Durch die erfindungsgemäße Anordnung ergibt sich darüber hinaus der weitere Vorteil, dass die Dachsäulen des hinteren Dachteils bedeutend schmaler bzw. die Heckscheibe selbst bedeutend breiter ausgestaltet werden kann, da die zweiten Hauptlenker im Unterschied zum bekannten Stand der Technik nicht mehr durch die vorderen Endbereiche der Dachsäulen abgedeckt werden müssen.

Ein weiterer Vorteil des erfindungsgemäßen Hardtop-Klappverdecks besteht darin, dass die Heckscheibenhalterung bzw. die Heckscheibe auf einfache Weise gegenüber den angrenzenden Dachsäulen des hinteren Dachteils bzw. dem oberen Dachteil abgedichtet werden kann.

Eine besonders einfache Heckscheibenhalterung kann darüber hinaus geschaffen werden, wenn die zweiten Hauptlenker auf den beiden Seiten des Kraftwagens die Heckscheibe seitlich begrenzen bzw. umranden. Darüber hinaus kann die Heckscheibe besonders breit gestaltet werden, wobei die beiden zweiten Hauptlenker sowohl zur Umrandung wie auch zur Steuerung der Bewegung der Heckscheibe beim Überführen zwischen der Schließstellung und der Verstaustellung dienen. Eine besonders steife bzw. stabile Heckscheibenhalterung lässt sich dabei erreichen, wenn die beiden Hauptlenker über zumindest eine Querverbindung miteinander verbunden sind.

Eine besonders einfache Gestaltung der Heckscheibenhalterung lässt sich weiter dadurch erreichen, dass die zweiten Hauptlenker mit einem jeweiligen oberen Lenkerarm gegenüber dem oberen Ende der Heckscheibe bis zu den Anlenkungspunkten mit dem oberen Dachteil überstehen.

Um in der Verstaustellung des Klappverdecks einen hinreichenden Längenversatz in Fahrzeuglängsrichtung zwischen dem oberen Dachteil und der Heckscheibe erreichen zu können, hat es sich in weiterer Ausgestaltung der Erfindung als vorteilhaft gezeigt, wenn die zweiten Hauptlenker mit ihrem jeweiligen oberen Lenkerarm in einem erheblichen Abstand vor einer hinteren Abschlusskante des oberen Dachteils zumindest mittelbar an diesem angelenkt sind. Durch einen derartig erheblichen Längenversatz in der Verstaustellung des Klappverdecks ist es möglich, das obere Dachteil und die entgegengesetzt gewölbte Heckscheibe entsprechend nahe bzw. eng zueinander im Verdeckstauraum abzulegen.

Ein besonders stabiler Klappmechanismus des Klappverdecks kann darüber hinaus geschaffen werden, wenn die Heckscheibenhalterung als Heckscheibenrahmen ausgebildet ist, wobei die zweiten Hauptlenker über jeweils eine Querverbindung am oberen und unteren Ende der Heckscheibe miteinander verbunden sind. Dabei hat es sich als insbesondere vorteilhaft gezeigt, wenn die beiden zweiten Hauptlenker sowie zumindest die obere Querverbindung die Heckscheibe rahmenartig umgreifen und somit zuverlässig in ihrer Position sichern.

Ein besonders komfortables Klappverdeck zeichnet sich in weiterer Ausgestaltung der Erfindung dadurch aus, dass die Heckscheibe bei geschlossenem Klappverdeck entlang des Heckscheibenrahmens höhenverstellbar bzw. öffenbar ausgebildet ist. Hierdurch ist eine zusätzliche Lüftungsmöglichkeit für den Innenraum des offenen Kraftwagens bei geschlossenem Klappverdeck geschaffen, welches zum sportlichen Gesamtkonzept des offenen Kraftwagens beiträgt. Ein Verstellantrieb zur Höhenverstellung bzw. zur Öffnung der Heckscheibe ist dabei in vorteilhafter Weise im Bereich, und vorzugsweise innerhalb des Heckscheibenrahmens zumindest weitestgehend verborgen angeordnet.

Eine besonders stabile Anordnung des Heckscheibenrahmens bzw. des gesamten Klappverdecks an dem Kraftwagen kann darüber hinaus erreicht werden, indem die untere Querverbindung ein Querelement aufweist, welches sich rückwärtig an einem Querträger oberseitig einer Trennwand des Kraftwagens anschließt. Darüber hinaus kann das Querelement gemeinsam mit dem Querträger der Trennwand eine Traganordnung für eine Hutablage bilden, über welche der Innenraum des Kraftwagens bei geschlossenem Klappverdeck vom dahinterliegenden Verdeckstauraum unterteilt ist.

Eine besonders platzsparende Anordnung mit einem entsprechend großen Längenversatz in Fahrzeuglängsrichtung zwischen dem oberen Dachteil und der Heckscheibe kann geschaffen werden, wenn der Heckscheibenrahmen in seiner Verstaustellung mit seinem unteren bzw. vorderen Ende nahe des Querträgers der Trennwand zu liegen kommt.

Eine besonders einfache Abdichtung des Heckscheibenrahmens zur Außenseite hin kann darüber hinaus durch eine umlaufende Dichtung geschaffen werden, mit welcher dieser gegen das obere Dachteil bzw. die Dachsäulen des hinteren Dachteils abzudichten ist. Mit anderen Worten kann der Heckscheibenrahmen demgemäß bei geschlossenem Klappverdeck mit einer Dichtkraft in Richtung nach außen beaufschlagt werden, so dass sich auf einfache Weise eine sichere Abdichtung der Heckscheibe gegenüber den angrenzenden Bauteilen des Klappverdecks ergibt.

Eine besonders platzsparende Anordnung des Klappverdecks in der Verstaustellung lässt sich darüber hinaus erreichen, wenn die Heckscheibe oberhalb eines Kraftstofftanks des Kraftwagens in ihrer Verstaustellung zu liegen kommt.

Schließlich lässt sich das Hardtop-Klappverdeck auf besonders einfache Weise als vorfertigbare Baueinheit gestalten, wenn jeder der beiden seitlichen Lenkermechanismen ein Hauptlager umfasst, über welches der jeweils zugehörige erste und zweite Hauptlenker an der Karosserie des offenen Kraftwagens schwenkbar gelagert ist. Hierdurch ist es möglich, das Klappverdeck auf einfache Weise im Wesentlichen dadurch an der Karosserie des offenen Kraftwagens zu befestigen, dass die beiden Hauptlager entsprechend mit den tragenden Bauteilen des Kraftwagens verbunden werden.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

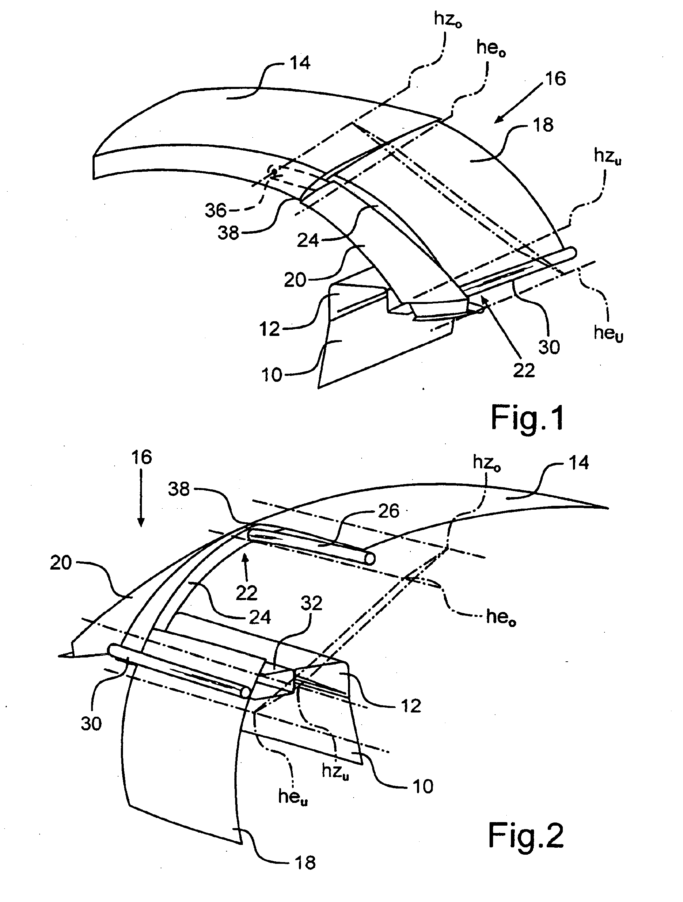

- Fig. 1: eine schematische Perspektivansicht auf ein Hardtop-Klappverdeck für einen ansonsten nicht weiter erkennbaren offenen Kraftwagen, welches im Wesentlichen ein oberes Dachteil und ein zwei seitliche Dachsäulen und eine dazwischen angeordnete Heckscheibe umfassendes hinteres Dachteil aufweist, welche hier in ihrer den Innenraum des Kraftwagens überdeckenden Schließstellung dargestellt sind;
- Fig. 2: eine schematische und perspektivische Schnittansicht durch das Hardtop-Klappverdeck entlang einer vertikal und in Fahrzeuglängsrichtung verlaufenden Schnittebene, wobei die Heckscheibe durch einen Heckscheibenrahmen gehalten und bei geschlossenem Klappverdeck aus einer geschlossenen in eine hier dargestellte geöffnete Stellung höhenverstellbar ist;

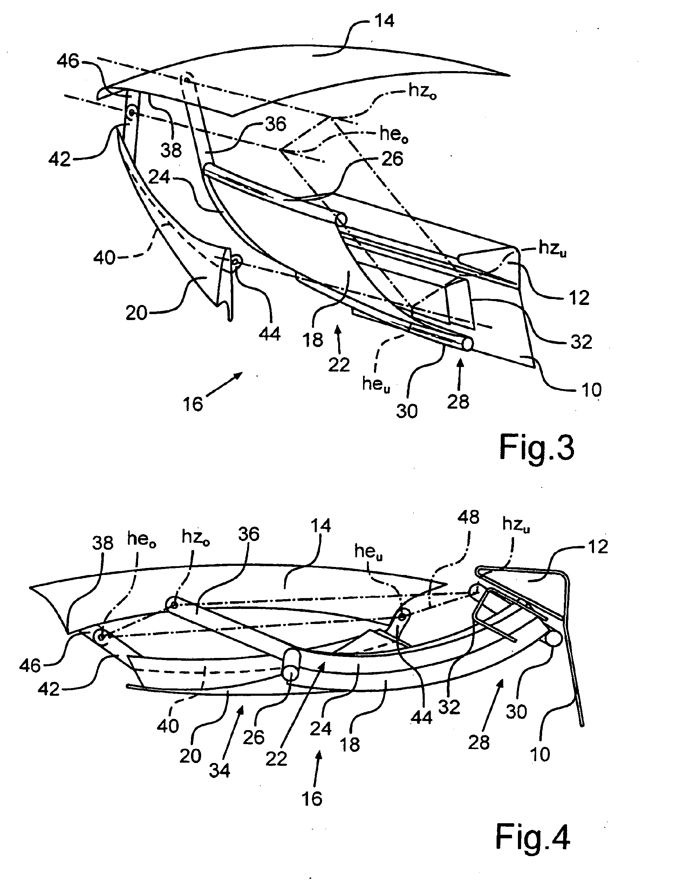

- Fig. 3: eine schematische und perspektivische Schnittansicht auf das wiederum entlang einer vertikalen und in Fahrzeuglängsrichtung verlaufenden Schnittebene geschnitten dargestellte Klappverdeck, welches im Verlauf seiner Öffnungsbewegung aus den in den Fig. 1 und 2 dargestellten Schließstellung gezeigt ist;
- Fig. 4: eine schematische Seitenansicht auf das vollständig in seine Verstaustellung überführte Klappverdeck gemäß den Fig. 1 bis 3; und in

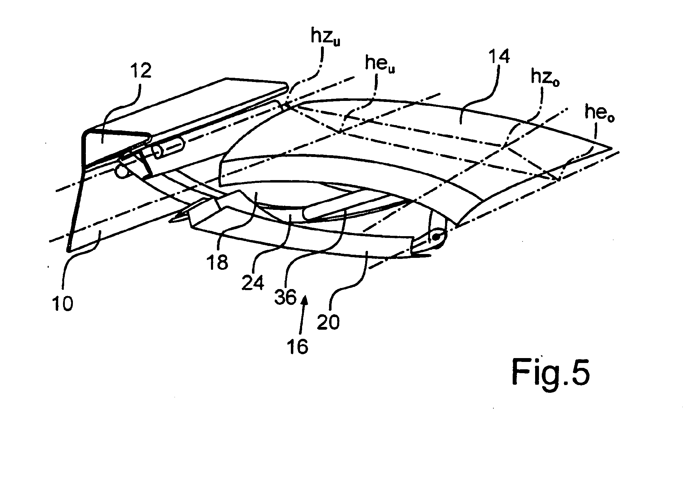

- Fig. 5: eine schematische Perspektivansicht auf das ebenfalls in seiner Verstaustellung dargestellte Klappverdeck gemäß den Fig. 1 bis 4.

In Fig. 1 ist in einer schematischen Perspektivansicht von schräg links hinten ein Hardtop-Klappverdeck für einen offenen Kraftwagen dargestellt, von welchem lediglich eine den Innenraum des Kraftwagens nach hinten hin begrenzende hintere Trennwand 10 erkennbar ist, an deren Oberseite ein in Fahrzeugquerrichtung verlaufender Querträger 12 angeordnet ist. Die Trennwand 10 bzw. der oberseitig angeordnete Querträger 12 erstrecken sich dabei am hinteren Ende der Fahrgastzelle über die gesamte Fahrzeugbreite bis zu nicht dargestellten Seitenwänden des beispielweise als zweisitzigen Roadster ausgebildeten Kraftwagens. Das Hardtop-Klappverdeck umfasst ein sich an einen nicht dargestellten Windschutzscheibenrahmen anschließendes oberes Dachteil 14 sowie ein sich daran anschließendes hinteres Dachteil 16, welches im Wesentlichen aus einer Heckscheibe 18 und seitlich diese begrenzende Dachsäulen 20 gebildet ist. Das obere Dachteil 14 ist im vorliegenden Ausführungsbeispiel als eigensteifes Schalenelement beispielsweise aus einem Metallblech oder Kunststoff ausgebildet. Gleichfalls wäre es auch denkbar, das obere Dachteil 14 im Wesentlichen als Glaselement oder dergleichen auszugestalten. Die Dachsäulen 20 des hinteren Dachteils 16 sind ebenfalls aus einem Metallblech oder aus Kunststoff hergestellt. Die Heckscheibe 18 kann sowohl aus einem Sicherheitsglas wie auch einem entsprechend durchsichtigen Kunststoff hergestellt sein.

In Zusammenschau mit Fig. 2, welche in einer perspektivischen und schematischen Schnittansicht entlang einer vertikal und in Fahrzeuglängsrichtung verlaufenden Schnittebene das Hardtop-Klappverdeck gemäß Fig. 1 von schräg hinten rechts darstellt, wird erkennbar, dass die Heckscheibe 18 von einer Heckscheibenhalterung in Form eines Heckscheibenrahmens 22 gehalten ist. Der Heckscheibenrahmen 22 umfasst im Wesentlichen zwei seitliche zweite Hauptlenker 24, von denen in Fig. 2 lediglich der linke Hauptlenker 24 erkennbar ist. Die beiden Hauptlenker 24 sind über jeweils eine Querverbindung 26, 28 am oberen und unteren Ende der Heckscheibe 18 miteinander verbunden, so dass sich insgesamt eine im Wesentlichen rechteckförmige Umrandung für die Heckscheibe 18 ergibt. Die obere Querverbindung 26 am oberen Ende der Heckscheibe 18 ist im vorliegenden Ausführungsbeispiel als Profilrohr ausgebildet. Gleichfalls wäre es natürlich auch denkbar, eine andersartig gestaltete obere Querverbindung 26 zu verwenden. Die untere Querverbindung 28 umfasst ebenfalls ein Profilrohr 30, welches - in Fahrzeuglängsrichtung betrachtet - hinter der Heckscheibe 18 angeordnet ist und die beiden zweiten Hauptlenker 24 stabil miteinander verbindet. Weiterhin umfasst die untere Querverbindung 28 ein Querelement 32, welches im vorliegenden Ausführungsbeispiel als kastenförmiger Träger ausgebildet ist. Nach oben hin schließt das Querelement 32 in der hier dargestellten Schließstellung des Hardtop-Klappverdecks in etwa eben mit dem davor angeordneten Querträger 12 an der Oberseite der Trennwand 10 ab. Gemeinsam mit dem Querträger 12 bildet das Querelement 32 in der Schließstellung des Klappverdecks eine Traganordnung für eine Hutablage.

Wie aus Fig. 2 erkennbar ist, ist die Heckscheibe 18 bei sich in der Schließstellung befindendem Klappverdeck aus einer in Fig. 1 dargestellten geschlossenen Stellung in eine in Fig. 2 dargestellte geöffnete Stellung überführbar. Dabei dienen die seitlich der Heckscheibe 18 angeordneten zweiten Hauptlenker 24 als seitliche Führungsschienen, durch welche die Heckscheibe 18 geführt bzw. gehalten ist. Zur Höhenverstellung bzw. zur Öffnung der Heckscheibe 18 ist vorzugsweise innerhalb des Heckscheibenrahmens 22 ein Verstellantrieb verborgen angeordnet. Vorzugsweise ist die Heckscheibe 18 dabei zwischen der vollständig geschlossenen Stellung und der vollständig geöffneten Stellung in jede beliebige Offenstellung bringbar. Unterhalb der Heckscheibe 18 ist hierzu ein entsprechender Freiraum vorgesehen, in welchen die Heckscheibe 18 abgesenkt werden kann. Dieser Freiraum schließt sich vorzugsweise hinter einem nicht dargestellten Kraftstofftank an, welcher seinerseits rückwärtig der Trennwand 10 angeordnet ist.

In Fig. 3 ist in einer schematischen und perspektivischen Schnittansicht entlang einer vertikal und in Fahrzeuglängsrichtung verlaufenden Schnittebene das Hardtop-Klappverdeck von schräg hinten rechts in einer Zwischenstellung dargestellt, welche dieses beim Überführen aus der in den Fig. 1 und 2 dargestellten Schließstellung in die in Fig. 4 dargestellte Verstaustellung durchläuft. Demgemäß ist in Fig. 4 das Hardtop-Klappverdeck in einer schematischen Seitenansicht von der rechten Außenseite her dargestellt, in welcher dieses in einem nicht dargestellten Heckstauraum bzw. Kofferraum des Kraftwagens einliegt. Anhand von Fig. 4, in welchem ein rechter seitlicher Lenkermechanismus 34 erkennbar ist, der an der rechten Außenseite des Kraftwagens angeordnet ist, soll nun die prinzipielle Funktionsweise des Hardtop-Klappverdecks beim Überführen aus der Schließstellung in die hier dargestellte Verstaustellung - und zurück - erläutert werden. Der zweite Hauptlenker 24 steht mit einem oberen Lenkerarm 36 gegenüber der am oberen Ende der Heckscheibe 18 angeordneten Querverbindung 26 erhaben über und ist vorliegend mittelbar oder unmittelbar im Bereich eines oberen Anlenkpunktes hzₒ mit dem oberen Dachteil 14 gelenkig verbunden. Dabei ist insbesondere aus Fig. 4 erkennbar, dass der entsprechende zweite Hauptlenker 24 mit seinem oberen Lenkerarm 36 - in Fahrzeuglängsrichtung betrachtet - in einem erheblichen Abstand vor einer hinteren Abschlusskante 38 des oberen Dachteils 14 angelenkt ist. An seinem unteren Ende ist der zweite Hauptlenker 24 im Bereich eines unteren Anlenkpunktes hzᵤ relativ fest zur Karosserie des Kraftwagens bzw. zum Querträger 12 der Trennwand 10 schwenkbar gelagert.

Neben dem zweiten Hauptlenker 24 umfasst jeder der beiden seitlichen Lenkermechanismen 34 einen ersten Hauptlenker 40, der der jeweils zugehörigen Dachsäule 20 des hinteren Dachteils 16 zugeordnet ist. Dabei kann der erste Hauptlenker 40 als durchlaufender Lenker ausgebildet sein, welcher fest mit der jeweiligen Dachsäule 20 des hinteren Dachteils 16 verbunden ist. Gleichfalls wäre es auch denkbar, dass der erste Hauptlenker 40 jeder Dachsäule 20 in zumindest abschnittsweise durch diese selbst gebildet wird. In diesem Fall wäre es denkbar, dass die jeweils oberen und unteren Enden 42, 44 jeweils mit der zugehörigen Dachsäule 20 miteinander verbunden sind. Im vorliegenden Ausführungsbeispiel jedoch erstreckt sich der erste Hauptlenker 40 über die gesamte Länge der zugehörigen Dachsäule 20, wobei vorliegend dessen oberes und unteres Ende 42, 44 sichtbar sind. Im Bereich eines oberen Anlenkpunktes heₒ ist das obere Ende 42 des ersten Hauptlenkers 40 schwenkbar mit dem oberen Dachteil 14 verbunden. Das obere Dachteil 14 umfasst hierzu einen zugehörigen Scharnierarm 46, der mit dem oberen Ende 42 des ersten Hauptlenkers 40 zusammenwirkt. Mit seinem unteren Ende ist der erste Hauptlenker 40 im Bereich eines unteren Anlenkpunktes heᵤ karosseriefest angelenkt. Zwischen dem jeweiligen oberen Anlenkpunkt heₒ, hzₒ des ersten und des zweiten Hauptlenkers 24, 40 kann auch ein Zwischenlenker vorgesehen sein, welcher seinerseits fest mit dem oberen Dachteil 14 verbunden ist. Insoweit würde dies der Ausgestaltung des Klappverdecks gemäß DE 197 51 660 C1 und DE 44 45 580 C1 entsprechen. Im vorliegenden Fall jedoch sind beide Hauptlenker 24, 40 jedes Lenkermechanismus 34 unmittelbar am oberen Dachteil 14 angelenkt.

Aus Fig. 4 ist somit erkennbar, dass durch die beiden oberen Anlenkpunkte heₒ, hzₒ und durch die beiden unteren Anlenkpunkte heᵤ, hzᵤ der beiden Hauptlenker 24, 40 ein im Wesentlichen parallelogrammartiger Lenkermechanismus 34 geschaffen ist, über welchen das Hardtop-Klappverdeck zwischen der Schließstellung und der Verstaustellung zu überführen ist. Die beiden unteren Anlenkpunkte heᵤ, hzᵤ der beiden jeweils einander zugeordneten Hauptlenker 24, 40 jedes Lenkermechanismus 34 sind dabei im vorliegenden Ausführungsbeispiel an einem durch die strichpunktierte Linie 48 symbolisch angedeuteten Hauptlager gebildet. Mit anderen Worten sind die einander zugehörigen Hauptlenker 24, 40 über jeweils ein gemeinsames Hauptlager (Linie 48) an der Karosserie des Kraftwagens, beispielsweise am Querträger 12 der Trennwand 10, festlegbar. Demgemäß bleibt die Position der beiden unteren Anlenkpunkte heᵤ, hzᵤ unabhangig von der Position des Hardtop-Klappverdecks unverändert gleich.

Insbesondere in Zusammenschau der Fig. 1, 3 und 4 ist dabei die Wirkungsweise des jeweils seitlichen Bereichs der Außenseite des Kraftwagens angeordneten, durch Strichpunktlinien angedeuteten Lenkermechanismen 34 erkennbar. Insbesondere ist erkennbar, dass der jeweilige hintere, erste Hauptlenker 40 im Wesentlichen hinter bzw. unterhalb des zugehörigen zweiten Hauptlenkers 24 angeordnet ist. Während der erste Hauptlenker 40 mit der zugehörigen Dachsäule 20 fest verbunden ist bzw. ggf. von dieser selbst zumindest abschnittsweise gebildet wird, kann sich der jeweils zugehörige zweite Hauptlenker 24 beim Überführen des Klappverdecks aus der Schließstellung in die Verstaustellung - und zurück - relativ zu den Dachsäulen 20 und somit auch zum ersten Hauptlenker 40 bewegen. Insbesondere aus den Fig. 3 und 4 ist dabei erkennbar, dass die jeweiligen zweiten Hauptlenker 24 des Heckscheibenrahmens 22 in einem erheblichen Abstand vor der hinteren Abschlusskante 38 am oberen Dachteil 14 angelenkt sind. Wie insbesondere aus Fig. 4 erkennbar wird, kommen demgemäß das obere Dachteil 14 sowie die Dachsäulen 20 des hinteren Dachteils 16 mit ihren vorderen Enden in einem erheblichen Abstand hinter dem vorderen Ende der Heckscheibe 18 in der Verstaustellung des Klappverdecks zu liegen, wobei die Heckscheibe 18 bzw. deren Heckscheibenrahmen 22 selbst nahe des Querträgers 20 der Trennwand 10 zu liegen kommt.

Insbesondere aus Fig. 4 ist demgemäß erkennbar, dass das obere Dachteil 14 und die gegensinnig gewölbte Heckscheibe 18 - in Fahrzeuglängsrichtung betrachtet - versetzt zueinander innerhalb des Verdeckstauraums zu liegen kommen. Demgemäß kann das hintere bzw. obere Ende der Heckscheibe 18 bzw. des Heckscheibenrahmens 22 äußerst nahe am oberen Dachteil 14 zu liegen kommen, während umgekehrt das vordere Ende des oberen Dachteils 14 äußerst nahe gegenüber dem mittleren Bereich der Heckscheibe 18 zu liegen kommt. Hierdurch ist es insgesamt möglich, das obere Dachteil 14 und die Heckscheibe 18 äußerst kompakt zueinander anzuordnen. Die in Fahrzeuglängsrichtung gesehen versetzte Anordnung des oberen Dachteils 14 und der Heckscheibe 18 bzw. des Heckscheibenrahmens 22 entsteht dabei dadurch, dass die zweiten Hauptlenker 24 integraler Bestandteil des Heckscheibenrahmens 22 und in einem erheblichen Abstand vor der hinteren Abschlusskante 38 am oberen Dachteil 14 angelenkt sind.

Zum Antrieb der beiden seitlichen Lenkermechanismen 34 kann beispielsweise jeweils ein Hauptlenker 24, 40 jedes der beiden Lenkermechanismen 34 mit einem Hydraulikzylinder, Pneumatikzylinder, einem elektrischen Stellantrieb oder dergleichen schwenkangetrieben werden. Dementsprechend wird der jeweils andere Hauptlenker 24, 40 jedes Lenkermechanismus 34 entsprechend mitbewegt, wodurch das Klappverdeck zwischen der Schließstellung und der Verstaustellung zu bewegen ist.

In Zusammenschau von Fig. 4 mit Fig. 5, welche in einer schematischen Perspektivansicht von schräg hinten links das Klappverdeck in der Verstaustellung zeigt, wird erkennbar, dass das obere Dachteil 14 etwa in Überdeckung mit den Dachsäulen 20 des hinteren Dachteils 16 zu liegen kommt. Die im Längenabstand vor dem oberen Dachteil 14 bzw. den Dachsäulen 20 angeordnete Heckscheibe 18 kommt oberhalb eines nicht weiter dargestellten Kraftstofftanks des Kraftwagens zu liegen, welcher sich seinerseits an der Rückseite der hinteren Trennwand 10 anschließt.

Zur Außenseite hin umfasst die Heckscheibe 18 bzw. deren Heckscheibenrahmen 22 eine nicht weiter dargestellte umlaufende Dichtung, mit welcher dieser gegen das obere Dachteil 14 bzw. die Dachsäulen 20 des hinteren Dachteils 16 bei geschlossenem Klappverdeck abzudichten ist.

Insgesamt ist somit aus den Figuren erkennbar, dass vorliegend ein Hardtop-Klappverdeck geschaffen ist, bei welchem an beiden Außenseiten des Kraftwagens jeweils einer der beiden Lenkermechanismen 34 angeordnet ist, welche im Wesentlichen zwei parallelogrammartig im Bereich der Anlenkungspunkte heₒ, heᵤ, hzₒ, hzᵤ miteinander zusammenwirkende Hauptlenker 24, 40 umfasst, über welche das Klappverdeck aus der Schließstellung in die Verstaustellung - und zurück - zu überführen ist. Der jeweils hintere, erste Hauptlenker 40 jedes der beiden Lenkermechanismen 34 ist dabei fest bzw. einteilig mit der zugehörigen Dachsäule 20 des hinteren Dachteils 16 ausgebildet und oberseitig an dem oberen Dachteil 14 angelenkt. Die jeweils zweiten Hauptlenker 24 jedes der beiden Lenkermechanismen 34 sind dem Heckscheibenrahmen 22 zugeordnet, so dass die Heckscheibe 18 bzw. deren Heckscheibenrahmen 22 insgesamt die Funktion des weiteren Hauptlenkers jedes Lenkermechanismus 34 wahrnimmt. Hierdurch ergibt sich eine besonders einfache Ausgestaltung des Klappverdecks. Darüber hinaus ermöglicht die Anlenkung der beiden zweiten Hauptlenker 24 in einem erheblichen Abstand vor der Abschlusskante 38 des oberen Dachteils 14, dass die Heckscheibe 18 in der Verstaustellung im Längenabstand vor dem oberen Dachteil 14 zu liegen kommt, wodurch sich insgesamt die äußerst sparende Anordnung des oberen Dachteils 14 gegenüber der Heckscheibe 18 innerhalb des Verdeckstauraums ergibt.

## Patentansprüche

1. Hardtop-Klappverdeck für einen offenen Kraftwagen mit einem oberen Dachteil (14) und einem eine Heckscheibe (18) aufweisenden hinteren Dachteil (16), welche über jeweils seitliche Lenkermechanismen (34) aus einer Schließstellung in eine Verstaustellung zu überführen sind, wobei jeder Lenkermechanismus (34) zwei Hauptlenker (24, 40) umfasst, von denen jeweils ein erster Hauptlenker (40) einer zugehörigen Dachsäule (20) des hinteren Dachteils (16) zugeordnet ist, und ein jeweils zweiter Hauptlenker (24) in einem Abstand vor dem zugehörigen ersten Hauptlenker (40) zumindest mittelbar am oberen Dachteil (14) angelenkt ist, und wobei eine Heckscheibenhalterung (22) der Heckscheibe (18) beim Überführen des Klappverdecks relativ zu den Dachsäulen (20) zu bewegen ist,
**dadurch gekennzeichnet, dass**
die zweiten Hauptlenker (24) jedes Lenkermechanismus (34) der Heckscheibenhalterung (22) der Heckscheibe (18) zugeordnet sind.

2. Hardtop-Klappverdeck nach Anspruch 1,
**dadurch gekennzeichnet, dass**
die zweiten Hauptlenker (24) die Heckscheibe (18) seitlich begrenzen und über wenigstens eine Querverbindung (26, 28) miteinander verbunden sind.

3. Hardtop-Klappverdeck nach Anspruch 1,
**dadurch gekennzeichnet, dass**
die zweiten Hauptlenker (24) mit einem jeweiligen oberen Lenkerarm (36) gegenüber dem oberen Ende der Heckscheibe (18) überstehen.

4. Hardtop-Klappverdeck nach Anspruch 3,
**dadurch gekennzeichnet, dass**
die zweiten Hauptlenker (24) mit ihrem jeweiligen oberen Lenkerarm (36) in einem erheblichen Abstand vor einer hinteren Abschlusskante (38) des oberen Dachteils (14) angelenkt sind.

5. Hardtop-Klappverdeck nach Anspruch 2,
**dadurch gekennzeichnet, dass**
die Heckscheibenhalterung als Heckscheibenrahmen (22) ausgebildet ist, wobei die zweiten Hauptlenker (24) über jeweils eine Querverbindung (26, 28) am oberen und unteren Ende der Heckscheibe (18) miteinander verbunden sind.

6. Hardtop-Klappverdeck nach Anspruch 5,
**dadurch gekennzeichnet, dass**
die Heckscheibe (18) bei geschlossenem Klappverdeck entlang des Heckscheibenrahmens (22) höhenverstellbar ausgebildet ist.

7. Hardtop-Klappverdeck nach Anspruch 5,
**dadurch gekennzeichnet, dass**
ein Verstellantrieb zur Höhenverstellung der Heckscheibe (18) im Bereich, und vorzugsweise innerhalb des Heckscheibenrahmens (22) angeordnet ist.

8. Hardtop-Klappverdeck nach Anspruch 5,
**dadurch gekennzeichnet, dass**
die untere Querverbindung (28) ein Querelement (32) aufweist, welches sich rückwärtig an einen Querträger (12) oberseitig einer Trennwand (10) des Kraftwagens anschließt.

9. Hardtop-Klappverdeck nach Anspruch 8,
**dadurch gekennzeichnet, dass**
das Querelement (32) und der Querträger (12) der Trennwand (10) eine Traganordnung für eine Hutablage bilden.

10. Hardtop-Klappverdeck nach Anspruch 8,
**dadurch gekennzeichnet,**
**dass** der Heckscheibenrahmen (22) in seiner Verstaustellung mit seinem unteren Ende nahe des Querträgers (12) der Trennwand (10) zu liegen kommt.

11. Hardtop-Klappverdeck nach Anspruch 5,
**dadurch gekennzeichnet, dass**
der Heckscheibenrahmen (22) zur Außenseite hin eine umlaufende Dichtung umfasst, mit welcher dieser gegen das obere Dachteil (14) bzw. die Dachsäulen (20) des hinteren Dachteils (12) abzudichten ist.

12. Hardtop-Klappverdeck nach Anspruch 1,
**dadurch gekennzeichnet, dass**
in der Verstaustellung des Klappverdecks die Heckscheibe (18) oberhalb eines Kraftstofftanks des Kraftwagens zu liegen kommt.

13. Hardtop-Klappverdeck nach Anspruch 12,
**dadurch gekennzeichnet, dass**
das obere Dachteil (14) und die Dachsäulen (20) des hinteren Dachteils (16) mit ihren vorderen Enden in einem Abstand hinter dem vorderen Ende der Heckscheibe (18) zu liegen kommen.

14. Hardtop-Klappverdeck nach Anspruch 1,
**dadurch gekennzeichnet, dass**
jeder der beiden seitlichen Lenkermechanismen (34) ein Hauptlager (48) umfasst, über welches der jeweils zugehörige erste und zweite Hauptlenker (24, 40) an der Karosserie des Kraftwagens schwenkbar gelagert ist.

## Claims

1. Hardtop folding roof for an open motor vehicle, comprising an upper roof part (14) and a rear roof part (16) with a rear window (18), which can be transferred from a closed position into a stowage position by way of lateral link mechanisms (34), wherein each link mechanism (34) comprises two main links (24, 40), whereof a first main link (40) is assigned to a corresponding pillar (20) of the rear roof part (16) and a second main link (24) is at least indirectly pivoted on the upper roof part (14) at a distance from the corresponding first main link (40), and wherein a rear window holder (22) of the rear window (18) is movable relative to the pillars (20) as the folding roof is transferred,
**characterised in that**
the second main links (24) of each link mechanism (34) are assigned to the rear window holder (22) of the rear window (18).

2. Hardtop folding roof according to claim 1,
**characterised in that**
the second main links (24) bound the rear window (18) laterally and are joined to each other by at least one transverse link (26, 28).

3. Hardtop folding roof according to claim 1,
**characterised in that**
each of the second main links (24) projects with an upper link arm (36) relative to the upper end of the rear window (18).

4. Hardtop folding roof according to claim 3,
**characterised in that**
each of the second main links (24) is pivoted with its upper link arm (36) at a significant distance in front of a rear end edge (38) of the upper roof part (14).

5. Hardtop folding roof according to claim 2,
**characterised in that**
the rear window holder is designed as a rear window frame (22), wherein the second main links (24) are joined to each other by a transverse link (26, 28) each at the upper and at the lower end of the rear window (18).

6. Hardtop folding roof according to claim 5,
**characterised in that**
the rear window (18) is designed to be vertically adjustable along the rear window frame (22) in the closed position of the folding roof.

7. Hardtop folding roof according to claim 5,
**characterised in that**
an adjusting drive for the vertical adjustment of the rear window (18) is located in the region of and preferably within the rear window frame (22).

8. Hardtop folding roof according to claim 5,
**characterised in that**
the lower transverse link (28) comprises a transverse element (32) which adjoins towards the rear a crossmember (12) above a partition (10) of the motor vehicle.

9. Hardtop folding roof according to claim 8,
**characterised in that**
the transverse element (32) and the crossmember (12) of the partition (10) form a support arrangement for a rear shelf.

10. Hardtop folding roof according to claim 8,
**characterised in that**
the lower end of the rear window frame (22) comes to lie in the vicinity of the crossmember (12) of the partition (10) in its stowage position.

11. Hardtop folding roof according to claim 5,
**characterised in that**
the rear window frame (22) comprises a continuous seal towards the outside, by means of which it can be sealed against the upper roof part (14) or the pillars (20) of the rear roof part (12) respectively.

12. Hardtop folding roof according to claim 1,
**characterised in that**
the rear window (18) comes to lie above a fuel tank of the motor vehicle in the stowage position of the folding roof.

13. Hardtop folding roof according to claim 12,
**characterised in that**
the upper roof part (14) and the pillars (20) of the rear roof part (16) come to lie with their front ends at a distance behind the front end of the rear window (18).

14. Hardtop folding roof according to claim 1,
**characterised in that**
each of the two lateral link mechanisms (34) comprises a main bearing (48) by way of which the associated first and second main links (24, 40) are pivotably mounted on the body of the motor vehicle.

## Revendications

1. Capote de toit ouvrant pour un véhicule automobile ouvert comprenant une partie supérieure de toit (14) et une partie arrière de toit (16) présentant une vitre arrière (18), ces parties pouvant être transférées d'une position de fermeture à une position de rangement par des mécanismes à bras oscillants latéraux respectifs (34), chaque mécanisme à bras oscillants (34) comprenant deux bras oscillants principaux (24, 40), dont respectivement un premier bras oscillant principal (40) est associé à un montant de toit correspondant (20) de la partie arrière de toit (16), et dont respectivement un deuxième bras oscillant principal (24) est articulé dans un espace devant le premier bras oscillant principal correspondant (40) au moins indirectement à la partie de toit supérieure (14), et une fixation de vitre arrière (22) de la vitre arrière (18) pouvant être déplacée lors du transfert de la capote par rapport aux montants de toit (20),
**caractérisé en ce que**
les deuxièmes bras oscillants principaux (24) de chaque mécanisme à bras oscillants (34) sont associés à la fixation de vitre arrière (22) de la vitre arrière (18).

2. Capote de toit ouvrant selon la revendication 1,
**caractérisé en ce que**
les deuxièmes bras oscillants principaux (24) délimitent la vitre arrière (18) latéralement et qu'ils sont liés ensemble par au moins une traverse (26, 28).

3. Capote de toit ouvrant selon la revendication 1,
**caractérisé en ce que**
les deuxièmes bras oscillants principaux (24) dépassent avec un bras de commande supérieure respectif (36) face à l'extrémité supérieure de la vitre arrière (18).

4. Capote de toit ouvrant selon la revendication 3,
**caractérisé en ce que**
les deuxièmes bras oscillants principaux (24) sont articulés avec leur bras de commande supérieur respectifs (36) dans un espace important devant un rebord arrière (38) de la partie supérieure de toit (14).

5. Capote de toit ouvrant selon la revendication 2,
**caractérisé en ce que**
la fixation de vitre arrière est conçue comme cadre de vitre arrière (22), les deuxièmes bras principaux (24) étant liés ensemble par une traverse (26, 28) respectivement sur l'extrémité supérieure et inférieure de la vitre arrière (18).

6. Capote de toit ouvrant selon la revendication 5,
**caractérisé en ce que**
la vitre arrière (18) est conçue de manière à ce qu'elle est réglable en hauteur dans le sens longitudinal du cadre de la vitre arrière (22) lorsque le toit ouvrant est fermé.

7. Capote de toit ouvrant selon la revendication 5,
**caractérisé en ce que**
un entrainement de réglage pour le réglage de la hauteur de la vitre arrière (18) est disposée dans la zone, et de préférence à l'intérieur, du cadre de la vite arrière (22).

8. Capote de toit ouvrant selon la revendication 5,
**caractérisé en ce que**
la traverse inférieure (28) dispose d'un élément transversal (32) qui se raccorde à l'arrière sur une barre transversale (12) sur la partie supérieure d'une cloison (10) du véhicule automobile.

9. Capote de toit ouvrant selon la revendication 8,
**caractérisé en ce que**
l'élément transversal (32) et la barre transversale (12) de la cloison (10) forment un emplacement de support pour une plage arrière.

10. Capote de toit ouvrant selon la revendication 8,
**caractérisé en ce que**
le cadre de vitre arrière (22) vient se poser dans la position de rangement avec son extrémité inférieure à proximité de la barre transversale (12) de la cloison (10).

11. Capote de toit ouvrant selon la revendication 5,
**caractérisé en ce que**
le cadre de vitre arrière (22) comprend vers la face externe un joint périmétrique, avec lequel celui-ci est isolé de la partie supérieure de toit (14) et/ou des montants de toit (20) de la partie arrière de toit (12).

12. Capote de toit ouvrant selon la revendication 1,
**caractérisé en ce que**
la vitre arrière (18) vient se poser dans la position de rangement de la capote de toit ouvrant au dessus d'un réservoir à carburant du véhicule automobile.

13. Capote de toit ouvrant selon la revendication 12,
**caractérisé en ce que**
la partie supérieure de toit (14) et les montants de toit (20) de la partie arrière de toit (16) viennent se poser avec leurs extrémités antérieures dans un espace derrière l'extrémité antérieure de la vitre arrière (18).

14. Capote de toit ouvrant selon la revendication 1,
**caractérisé en ce que**
chacun des deux bras oscillants latéraux (34) comprend un palier principal (48), par lequel chaque premier et deuxième bras oscillant principal respectif correspondant (24, 40) est disposé sur la carrosserie du véhicule automobile de façon à pouvoir pivoter.
